# EUROPÄISCHE PATENTSCHRIFT

(11) **EP 2 833 742 B1**
(45) Veröffentlichungstag und Bekanntmachung des Hinweises auf die Patenterteilung: **02.12.2015**
(21) Anmeldenummer: 13714202.2
(22) Anmeldetag: 20.03.2013
(51) Int. Cl.: A23L 3/00, A23L 3/04

(54) **PASTEURISIERVORRICHTUNG**
PASTEURIZING APPARATUS
DISPOSITIF DE PASTEURISATION

(30) Priorität: 04.04.2012 DE 102012006742
(43) Veröffentlichungstag der Anmeldung: 11.02.2015
(73) Patentinhaber: KHS GmbH, 44143 Dortmund (DE)
(72) Erfinder: KÖPPEL, Frank, 59425 Unna (DE); TODOROSKI, Aco, 59423 Unna (DE)
(86) Internationale Anmeldenummer: PCT/EP2013/000835
(87) Internationale Veröffentlichungsnummer: WO 2013/149702

(56) Entgegenhaltungen:
- DE-A1-102010 020 429
- US-A1- 2005 263 172
- US-A1- 2006 040 029

## Beschreibung

Die Erfindung bezieht sich auf eine Pasteurisiervorrichtung oder auf einen Pasteur gemäß Oberbegriff Patentanspruch 1.

Pasteure zum Pasteurisieren von mit einem flüssigen Füllgut, beispielsweise mit einem flüssigen Füllgut gefüllten Behältern, z.B. Flaschen, sind in unterschiedlichen Ausführungen bekannt und umfassen generell u.a. ein beispielsweise von einem Transportband gebildeten Transportelement, mit dem die zu pasteurisierenden Behälter durch mehrere, in einer Transportrichtung des Transportelementes aufeinander folgende und voneinander getrennte Zonen des Pasteurs bewegt werden. In den Zonen werden die Behälter mit einem erwärmten oder erhitzten flüssigen Behandlungsmedium in Form von Wasser beaufschlagt. Die Zonen einer ersten, in Transportrichtung auf einen Behältereinlass folgenden Gruppe von Zonen dienen dabei als Aufwärmzonen, in denen zum zunehmenden Aufwärmen der Behälter die Temperatur des Behandlungsmediums von Zone zu Zone stufenförmig ansteigt. Die Zonen einer in Transportrichtung anschießenden Gruppe dienen als eigentliche Pasteurisierzonen, in denen die Behälter mit dem auf eine Pasteurisiertemperatur erhitzten flüssigen Behandlungsmedium (Wasser) beaufschlagt werden. Die Zonen einer in Transportrichtung anschließenden weiteren Gruppe dienen als Abkühlzonen, in denen die Temperatur des Behandlungsmediums von Stufe zu Stufe abnimmt. Der Verlauf der Behandlungstemperaturen in den einzelnen Zonen und dabei insbesondere auch in den als Pasteurisierzonen dienenden Zonen ist so eingestellt, dass unter Berücksichtigung der Transportgeschwindigkeit des Transportelementes, d.h. unter Berücksichtigung der Verweil- oder Behandlungsdauer der Behälter insbesondere auch in den Pasteurisierzonen jeder Behälter ordnungsgemäß pasteurisiert wird, d.h. jedem Behälter die erforderlichen Pasteurisiereinheiten verabreicht werden. Der Verlauf der Behandlungstemperaturen ist nicht nur so eingestellt, dass eine ausreichende Pasteurisierung der Behälter gewährleistet ist, sondern auch so eingestellt, dass eine Überpasteurisation vermieden wird, die die Qualität, insbesondere auch die geschmackliche Qualität des Füllgutes beeinträchtigt.

Alle bekannten Pasteure sind derart ausgebildet, dass während des Betriebes dieser Pasteure die Transportgeschwindigkeit deren Transportelemente (pasteurinterne Transportelemente) und damit auch die Behandlungs- und Verweildauer der Behälter im Pasteur, insbesondere in den Pasteurisationszonen und auch den sonstigen Behandlungszonen konstant oder im Wesentlichen konstant ist.

Der jeweilige Pasteur ist in der Regel Bestandteil einer Gesamtanlage, in der beispielsweise das Füllen, Verschließen, Pasteurisieren und Ausstatten bzw. Etikettieren der Behälter erfolgt.

Störungen oder auch jede notwendige Reduzierung der Leistung (Anzahl der behandelten Behälter je Zeiteinheit) innerhalb der vor dem Pasteur liegenden Teile der Gesamtanlage, beispielsweise innerhalb der Füllmaschine führen häufig zu einem Produktmangel, d.h. zu einem Mangel an Behältern im Bereich des Pasteurs.

Störungen oder auch jede notwendige Reduzierung der Leistung innerhalb der nach dem Pasteur liegenden Teile der Gesamtanlage, beispielsweise innerhalb der Etikettiermaschine(n) oder einer Verpackungsanlage führen häufig zu einem Produktstau, der sich, ausgehend von der Störungsstelle, auch bis in den Pasteur hinein erstrecken kann.

Speziell im letzten Fall besteht die Gefahr einer das Füllgut schädigenden Überpasteurisation, sofern sich der Stau bis in den Pasteur fortsetzt und hierbei das pasteurinterne Transportelement abgeschaltet werden muss.

Selbst wenn ein sich abzeichnender oder beginnender Produktmangel oder Produktstau räumlich und/oder zeitlich bereits früh erkannt werden kann, beispielsweise durch eine übergeordnete, die Gesamtanlage steuernde Steuereinrichtung, kann bei bekannten Pasteuren letztlich nur so reagiert werden, dass der weitere Einlauf der Behälter in den Pasteur gestoppt, oder der Pasteur leergefahren wird, im Anschluss daran bis zur Behebung der Produktionsstörung usw. keine weiteren Behälter mehr durch den Pasteur bzw. dessen Zonen bewegt werden und der Antrieb des Pasteurs abgeschaltet wird. Derartige Maschinenstillstände des Pasteurs verursachen u.a. einen hohen Energie- und Wasserverbrauch (u.a. Kühlleistung beim Stoppen bzw. Wärmeenergie zum Aufheizen beim Wiederanfahren usw.

Zur Reduzierung der vorgenannten Nachteile wurden bereits Pasteure vorgeschlagen (DE 10 2010 020 429 A1, DE 199 08 035 B4), die es ermöglichen, auf Produktionsunterbrechungen und/oder Produktionsstörungen zu reagieren, allerdings im Wesentlichen nur durch Ein- und Ausschalten des pasteurinternen Transportelementes und/oder durch Steuerung der in den Zonen jeweils ausgebrachten Menge an Behandlungsmedium oder -flüssigkeit. Diese nur sehr grobe Anpassung an Produktionsunterbrechungen und/oder Produktionsstörungen kann durch die Anlagensteuerung oder aber durch Stauschalter erfolgen, die auf Transporteuren der Gesamtanlagen vor und/oder nach dem Pasteur vorgesehen sind. Für eine tatsächliche, an aktuelle Betriebszustände der Gesamtanlage angepasste und variable Änderung oder Regelung der Transportgeschwindigkeit des pasteurinternen Transportelementes, insbesondere auch in einem größeren Bereich oder sogar in einem sehr großen Bereich, sind die bekannten Pasteure jedoch nicht ausgebildet.

Ebenfalls bekannt wurde ein Pasteur entsprechend der US 2006/040029 A1.
Diese Schrift beschreibt eine Pasteurisierungsvorrichtung, bei der die Transportgeschwindigkeit des internen Transportbandes und die Pasteurisationstemperaturen durch einen integrierten Steuerungsmechanismus in Abhängigkeit von wechselnden Prozessbedingungen variiert werden, um voreingestellte Pasteurisierungsprofile einzuhalten. Zur Lösung dieser Aufgabe sieht die US 2006/040029 A1 aber keine Änderung der Aufgaben der einzelnen Behandlungszonen des Pasteurs vor.

Weiterhin bekannt wurde ein Pasteur entsprechend der US 2005/263172 A1.
Auch diese Schrift offenbart eine Pasteurisierungsvorrichtung mit variabler Transportbandgeschwindigkeit. Mehr im Detail beschäftigt sich diese Schrift mit der Sterilisation bzw. Pasteurisation der Oberfläche von Früchten wie beispielsweise Melonen, wozu Dampf eingesetzt wird. Auch diese Schrift sieht keine Änderung der Aufgaben der einzelnen Behandlungszonen des Pasteurs vor wenn sich Betriebszustände ändern.

Aufgabe der Erfindung ist es, eine Pasteurisiereinrichtung, d.h. einen Pasteur aufzuzeigen, der bei hoher Betriebssicherheit auch bei laufender Produktion ohne einen Produktions- oder Maschinenstopp eine kontinuierliche oder dynamische Anpassung der Verweildauer der Behälter innerhalb des Pasteurs in Abhängigkeit von dem aktuellen Betriebszustand der Gesamtanlage ermöglicht, und zwar ohne die Gefahr einer nicht ordnungsgemäßen Pasteurisierung und einer Überpasteurisierung. Zur Lösung dieser Aufgabe ist ein Pasteur entsprechend dem Patentanspruch 1 ausgebildet.

Eine Besonderheit des erfindungsgemäßen Pasteurs besteht darin, dass die Transportgeschwindigkeit des pasteurinternen Transportelementes und damit die Verweildauer der Behälter im Pasteur stufenlos steuerbar oder regelbar ist, und zwar zur dynamischen Anpassung an den aktuellen Betriebszustand der Gesamtanlage, insbesondere auch zur Anpassung an den Betriebszustand solcher Bereiche der Gesamtanlage, die sich in Transportrichtung der Behälter vor und/oder nach dem Pasteur befinden. Die Regelung und/oder Steuerung der Transportgeschwindigkeit des pasteurinternen Transportelementes bzw. des Pasteurs ist in weiten Grenzen stufenlos möglich, beispielsweise zwischen 0% und 130% einer Nenn-Transportgeschwindigkeit, bevorzugt zwischen 20% und 120% dieser Nenn-Transportgeschwindigkeit.

Um die erforderlichen Bedingungen für die Pasteurisierung einzuhalten, d.h. eine mangelhafte Pasteurisierung sowie auch eine Überpasteurisierung zu vermeiden, sieht die Erfindung weiterhin vor, dass zumindest in einigen Zonen des Pasteurs und dabei speziell auch in den beim Nennbetrieb des Pasteurs als Pasteurisierzonen dienenden Zonen in Abhängigkeit von der Transportgeschwindigkeit des pasteurinternen Transportelementes eine Änderung der Behandlungstemperatur erfolgt, und zwar gleichsinnig mit dieser Änderung der Transportgeschwindigkeit. Bei Erhöhung der Transportgeschwindigkeit wird demnach zumindest in einer Zone deren Behandlungstemperatur, d.h. die Temperatur des auf die Behälter ausgebrachten flüssigen Behandlungsmediums erhöht. Bei Reduzierung der Transportgeschwindigkeit wird demnach zumindest in einer Zone die Behandlungstemperatur, d.h. die Temperatur des auf die Behälter ausgebrachten Behandlungsmediums reduziert. Diese Anpassung der Behandlungstemperaturen erfolgt dabei bevorzugt in solchen Zonen, die bei Nennbetrieb des Pasteurs die Pasteurisierzonen bildet. Durch die Steuerung und/oder Regelung der Behandlungstemperaturen werden eindeutige und reproduzierbare Verhältnisse auch bei unterschiedlichen Transportgeschwindigkeiten des pasteurinternen Transportelementes erreicht.

Der Erfindung liegt dabei die Erkenntnis zugrunde, dass die Pasteurisationseinheiten in der jeweils zur Verfügung stehenden und von der Transportgeschwindigkeit des pasteurinternen Transportelementes abhängigen Zeit oder Verweildauer der Behälter innerhalb der Pasteurisierzonen verabreicht werden müssen, was bei höherer Transportgeschwindigkeit des pasteurinternen Transportelementes und der damit verbundenen kürzeren Verweildauer der Behälter durch Erhöhung der Behandlungstemperatur und/oder durch Erhöhung der Anzahl der Zonen mit höherer Behandlungstemperatur sowie umgekehrt bei reduzierter Transportgeschwindigkeit des Pasteurs und damit erhöhter Verweildauer der Behälter durch Reduzierung der Behandlungstemperatur und/oder der Anzahl der Zonen mit höheren Behandlungstemperaturen erreicht werden kann.

Durch die dynamische Regelung der Transportgeschwindigkeit mit adaptiver Anpassung der Behandlungstemperaturen ist der erfindungsgemäße Pasteur in der Lage, sich an sich ständig ändernde Situationen oder Betriebszustände der Gesamtanlage anzupassen, insbesondere auch in der Weise, dass er hinsichtlich seiner Leistung bzw. der Transportgeschwindigkeit des pasteurinternen Transportelementes als regel- oder steuerbarer Teil der Gesamtanlage der Leistung und/oder der Produktionsgeschwindigkeit der Gesamtanlage folgt.

"Behandlungstemperatur" bedeutet im Sinne der Erfindung jeweils die Temperatur des in der betreffenden Zone des Pasteurs auf die Behälter ausgebrachten flüssigen Behandlungsmediums, beispielsweise die Temperatur des als Behandlungsmedium verwendeten Wassers.

"Transportgeschwindigkeit des Pasteurs" bedeutet nachstehend auch die Transportgeschwindigkeit des pasteurinternen Transportelementes.

"Pasteurisierzonen" sind im Sinne der Erfindung solche Zonen des Pasteurs, in denen die Behälter mit dem auf eine Pasteurisiertemperatur, beispielsweise auf eine Temperatur zwischen etwa 60°C - 75°C, beispielsweise auf eine Temperatur von etwa 61,4°C erhitzten Behandlungsmedium beaufschlagt werden.

"Nennbetrieb des Pasteurs" bedeutet im Sinne der Erfindung derjenige Betriebszustand des Pasteurs, bei dem die Behälter mit einer diesem Nennbetrieb entsprechenden Nenn-Transportgeschwindigkeit durch den Pasteur bewegt und auch hierbei die Behandlungstemperaturen in den Zonen, insbesondere auch in den Pasteurisierzonen so eingestellt sind, dass jedem Behälter bei der Nenn-Transportgeschwindigkeit die erforderliche Anzahl an Wärme- oder Pasteurisiereinheiten verabreicht wird, sodass die erforderliche Pasteurisierung erreicht, eine Überpasteurisierung aber verhindert ist.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: in schematischer Funktionsdarstellung eine Anlage zum Füllen von Behältern in Form von Flaschen mit einem flüssigen Füllgut, mit einem in diese Anlage integrierten mehrstufigen Pasteur;
- Fig. 2 - 4: jeweils in einem Temperatur-Zeitdiagramm den Verlauf der Temperatur der Behälter beim Passieren der Zonen des Pasteurs bei unterschiedlichen Transportgeschwindigkeiten des Pasteurs.

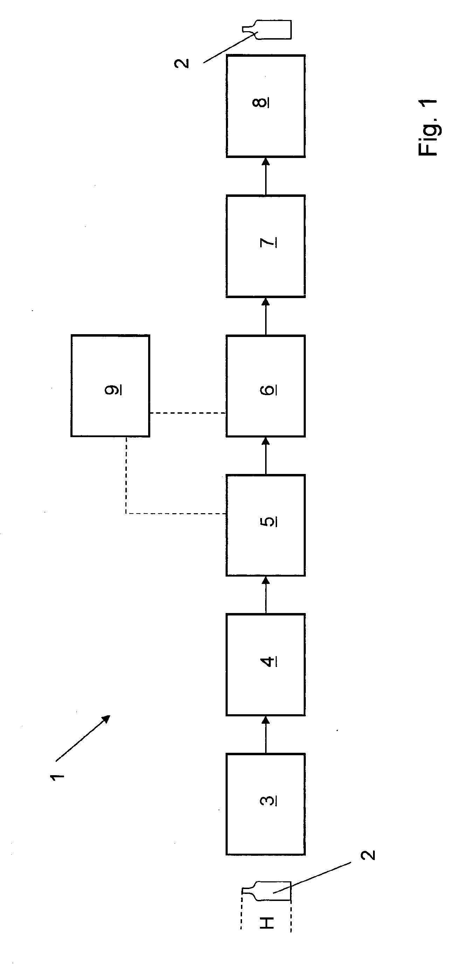

Die in der Figur 1 allgemein mit 1 bezeichnete Anlage dient u.a. zum Füllen von Behältern 2 in Form von Flaschen mit einem flüssigen Füllgut, zum anschließenden Verschließen, Pasteurisieren und Ausstatten, d.h. z.B. zum Etikettieren oder zum Etikettieren der gefüllten Behälter 2. Im Detail umfasst die Anlage u.a. einen Auspacker 3 zum Einbringen der Behälter 2 in die Anlage 1, eine Reinigungsmaschine 4 zum Reinigen und/oder Sterilisieren der Behälter 2, eine Füll- und Verschließmaschine 5 zum Füllen und Verschließen der Behälter 2, eine Pasteurisiervorrichtung, d.h. einen Pasteur 6 zum Pasteurisieren der Behälter 2 bzw. des in diese abgefüllten Füllgutes, eine Etikettiermaschine 7 sowie einen Einpacker 8 zum Einbringen der gefüllten, verschlossenen und etikettierten Behälter 2 in Verpackungseinheiten oder Gebinde. Die vorgenannten Aggregate oder Maschinen schließen in der vorgenannten Reihenfolge in einer Transportrichtung A aneinander an, in der die Behälter 2 durch die Anlage auch unter Verwendung geeigneter Transporteure oder Transportelemente bewegt werden.

Die Besonderheiten der Anlage 1 besteht in der Ausbildung des Pasteurs 6.

Der Pasteur 6 ermöglicht eine dynamische und angepasste Regelung der Transportgeschwindigkeit, mit welcher die Behälter 2 durch den Pasteur 6 bewegt werden, und damit eine dynamische und angepasste Regelung der Behandlungsdauer der Behälter 2 innerhalb des Pasteurs 6. Weiterhin ermöglicht der Pasteur 6 auch eine an die Behandlungsdauer angepasste ebenfalls dynamische Regelung oder Steuerung der Behandlungstemperaturen seiner Behandlungszonen, und zwar in Abhängigkeit von dem Betriebszustand der Anlage 1.

Die Steuerung und/oder Regelung der Transportgeschwindigkeit des Pasteurs 6 bzw. Behandlungsdauer und der Behandlungstemperaturen bzw. des Temperaturprofils des Pasteurs 6 erfolgen dabei über die Steuerung 9 der Anlage 1, und zwar beispielsweise in Abhängigkeit von dem Betriebszustand einer kritischen Anlagenkomponente oder Engpasskomponente, beispielsweise in Abhängigkeit von dem Betriebszustand der Füll- und Verschließmaschine 5. Die Steuerung und/oder Regelung der Transportgeschwindigkeit des Pasteurs 6 bzw. Behandlungsdauer und der Behandlungstemperaturen erfolgen derart, dass jeder Behälter 2 ausreichend pasteurisiert wird, d.h. vollständig mit den erforderlichen Pasteurisiereinheiten beaufschlagt wird, eine Überpasteurisierung aber vermieden ist.

Insbesondere erfolgt die Steuerung der Behandlungstemperaturen des Pasteurs 6 in Abhängigkeit von der Transportgeschwindigkeit beispielsweise derart, dass die den Behältern verabreichten Pasteurisationseinheiten während des gesamten Behandlungsprozesses mitgerechnet werden und somit u.a. unter Berücksichtigung der noch zur Verfügung stehenden Behandlungszeit die notwenigen Behandlungstemperaturen ermittelt werden.

Weiterhin erfolgt die Steuerung des Pasteurs 6 beispielsweise derart, dass bei einem Behälterstau in einer in Transportrichtung A auf den Pasteur 6 folgenden Anlagenkomponente (z.B. in der Etikettiermaschine 7 und/oder im Einpacker 8) die Transportgeschwindigkeit der Behälter 2 durch den Pasteur 6 bzw. dessen Behandlungszonen reduziert und damit die Behandlungsdauer erhöht wird, bei gleichsinniger Reduzierung der Behandlungstemperatur in einigen Zonen des Pasteurs 6 und damit bei gleichzeitiger Änderung des Temperaturprofils. Bei Behälterlücken innerhalb des Pasteurs 6 und/oder in dem auf den Pasteur 6 folgenden Teil der Anlage 1 wird die Transportgeschwindigkeit des Pasteurs 6 bei gleichzeitiger Erhöhung der Behandlungstemperatur in einigen Zonen des Pasteurs 6 bzw. bei gleichzeitiger Änderung des Temperaturprofils innerhalb des Pasteurs 6 erhöht. In diesem Sinne ist es beispielsweise möglich, die Transportgeschwindigkeit des Pasteurs 6 in einen Bereich zwischen 20% und 120 % der Nenn-Transportgeschwindigkeit zu regeln, ohne dass dabei der Pasteurisierungsprozess negativ beeinflusst wird. Es wird hierbei stets sichergestellt, dass alle geforderten Pasteurisationsbedingungen eingehalten werden und jeder Behälter 2 mit der erforderlichen Anzahl von Pasteurisiereinheiten beaufschlagt wird.

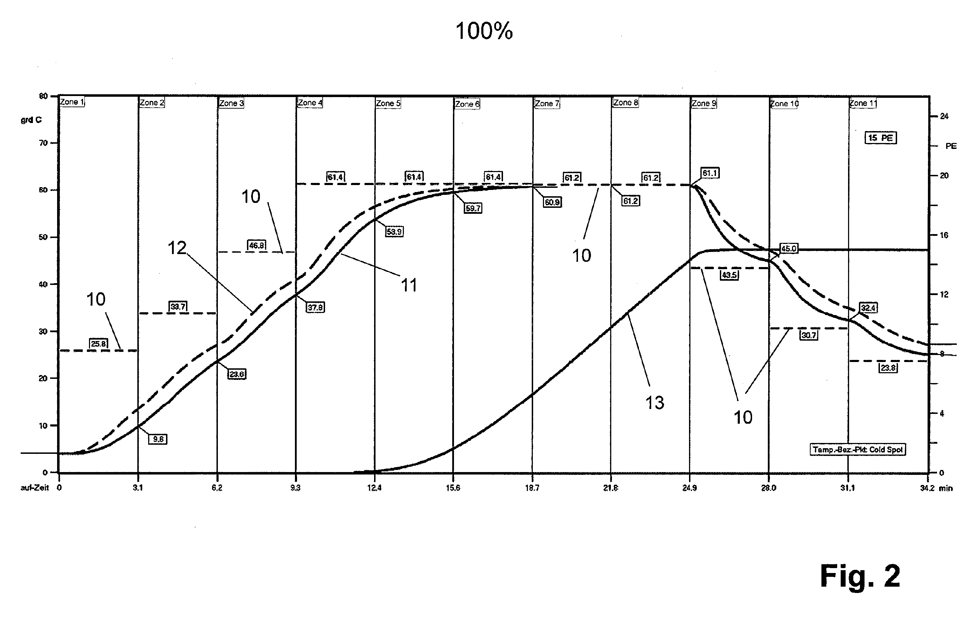

In der Figur 2 sind mit unterbrochenen Linien 10 die Behandlungstemperaturen und deren Verlauf innerhalb der insgesamt elf Behandlungszonen des Pasteurs 6, d.h. die Temperaturen des flüssigen Behandlungsmediums (Wasser) in diesen Zonen wiedergegeben, mit dem (Behandlungsmedium) die Behälter 2 in den betreffenden Behandlungszonen überschwallt werden, und zwar bei einer Transportgeschwindigkeit des Pasteurs, die zu 100% der Nenn-Transportgeschwindigkeit entspricht. Mit der Linie 11 ist in der Figur 2 der Temperaturverlauf wiedergegeben, die der sogenannte Cold-Spot des jeweiligen Behälters 2 aufweist. Unter Cold-Spot ist ein Punkt im Inneren des Behälters zu verstehen, wobei dieser Punkt auf der senkrechten Mittelachse des Behälters liegt und dabei einen Abstand von 10 mm vom Behälterboden hat, wobei der Behälter 2 mit seinem Behälterboden auf dem Transportelement oder Transportband des Pasteurs 6 aufsteht.

Mit der unterbrochenen Linie 12 ist der Verlauf der Temperatur wiedergegeben, den der jeweilige Behälter 2 bzw. ein die Behältertemperatur repräsentierende Punkt im inneren des Behälters aufweist. Dieser Punkt liegt auf der senkrechten Mittelachse des Behälters und liegt auf der Höhe von einem Drittel der Füllguthöhe H des in den Behälter eingefüllten Füllgutes. Mit der Kurve 13 ist die Zunahme der Pasteurisiereinheiten dargestellt, mit der der jeweilige Behälter 2 während der Behandlung beaufschlagt wird.

Wie den Linien 10 der Figur 2 zu entnehmen ist, steigt die Behandlungstemperatur in den Zonen 1 - 4 stufenförmig bis auf eine Pasteurisiertemperatur von etwa 61,4°C an, bleibt dann in den Zonen 4 - 6 konstant und fällt in den Zonen 9 - 11 wiederum stufenförmig ab, und zwar beispielsweise auf eine Ausgangstemperatur, beispielsweise auf die Ausgangstemperatur von etwa 24°C.

Wie die Kurven 11 und 12 zeigen, erfolgt in den Behandlungszonen 1 - 5 ein zunehmendes Erwärmen der Behälter 2, wobei die Behältertemperatur die Pasteurisiertemperatur von 61,4°C bereits innerhalb der Zone 6 erreicht. Hinsichtlich der Behandlungstemperatur bilden die Zonen 1 - 3 Vorbehandlungs- oder Aufwärmzonen. Die Zonen 4 - 8 sind solche mit der Behandlungstemperatur von 61,4°C, d.h. Pasteurisierzonen und die Zonen 9 - 11 Abkühlzonen.

Wie die Kurve 13 zeigt, erfolgt die Pasteurisierung der Behälter 2 im Wesentlichen in den Zonen 5 - 8 und ist in den Zonen 9 - 11 abgeschlossen, d.h. die Behälter 2 sind dann mit der notwendigen Anzahl von Pasteurisiereinheiten beaufschlagt.

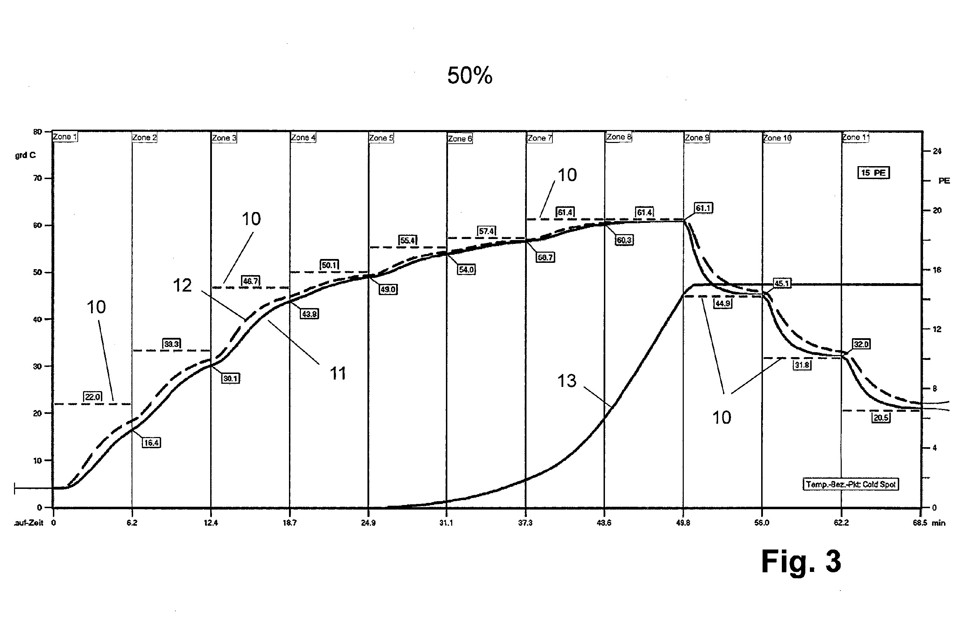

Die Figur 3 zeigt wiederum mit den unterbrochenen Linien 10 den Verlauf der Behandlungstemperatur in den einzelnen Behandlungszonen bei einer reduzierten Transportgeschwindigkeit des Pasteurs 6, die nur noch 50% der Nenn-Transportgeschwindigkeit beträgt, d.h. bei einer gegenüber der Figur 2 deutlich erhöhten Behandlungsdauer. Wie dargestellt, steigt die Behandlungstemperatur in den Zonen 1 - 7 stufenförmig an und erreicht erst in der Zone 7 die Pasteurisiertemperatur von 61,4°C. In den Zonen 7 und 8 bleibt die Behandlungstemperatur konstant auf Pasteurisiertemperatur. Die Zonen 7 und 8 sind in diesem Betriebszustand die Pasteurisierzonen. Die Zonen 9 - 11 bilden wiederum die Abkühlzonen, in denen die Behandlungstemperatur stufenförmig auf die Ausgangstemperatur, beispielsweise auf die Ausgangstemperatur von etwa 20°C abfällt.

Wie die Kurven 11 und 12 zeigen, erfolgt in diesem Betriebszustand des Pasteurs 6 in den Zonen 1 - 6 ein stetiges Erwärmen der Behälter 2, d.h. die Zonen 1 - 6 dienen in diesem Betriebszustand als Aufwärmzonen, wobei die Behältertemperatur die Pasteurisiertemperatur von 61,4°C tatsächlich erst in der Zone 8 erreicht.

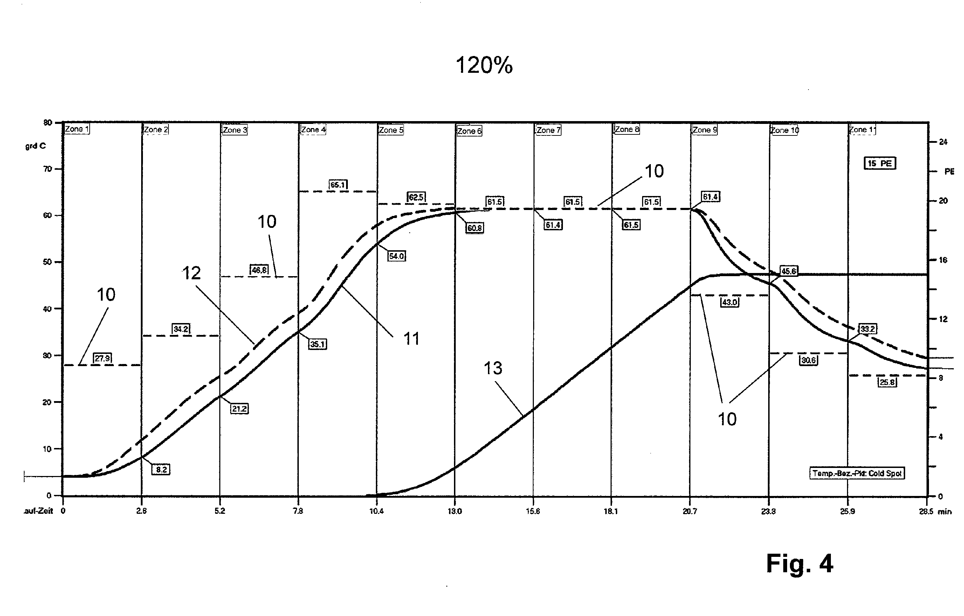

Figur 4 zeigt den Verlauf der Behandlungstemperaturen bei einer erhöhten Transportgeschwindigkeit des Pasteurs 6, die 120% der Nenn-Transportgeschwindigkeit entspricht. Wie mit den unterbrochenen Linien 10 angedeutet, steigt die Behandlungstemperatur in den Zonen 1 - 4 stufenförmig an, und zwar derart, dass die Behandlungstemperatur in der Zone 4 über der Pasteurisiertemperatur von 61,4°C liegt. In den Zonen 5 und 6 erfolgt eine stufenförmige Reduzierung der Behandlungstemperatur auf die Pasteurisiertemperatur von 61,5°C, die dann in den Zonen 6 - 8 konstant gehalten wird. In den Zonen 9 - 11 erfolgt die stufenförmig Reduzierung der Behandlungstemperatur auf die Ausgangstemperatur, beispielsweise auf die Ausgangstemperatur von etwa 27°C.

Wie der Verlauf der Kurven 11 und 12 zeigt, steigt die Temperatur der Behälter 2 in den Zonen 1 - 5 an und erreicht in Zone 6 die Sterilisationstemperatur von 61,5°C, die dann in den Zonen 6 - 8 konstant bleibt. In den Zonen 9 - 11 erfolgt wiederum eine Abkühlung der Temperatur der Behälter 2. Wie die Kurve 13 zeigt, setzt die Beaufschlagung der Behälter 2 mit den Pasteurisiereinheiten bei dieser erhöhten Transportgeschwindigkeit des Pasteurs 6 bereits am Ende der Zone 4 ein und hat am Ende der Zone 5 bereits einen deutlichen Wert erreicht.

Die vorstehenden Ausführungen haben gezeigt, dass mit der dynamischen Regelung oder Steuerung der Transportgeschwindigkeit des Pasteurs 6 einhergehend nicht nur die Behandlungstemperaturen verschiedener Zonen des Pasteurs 6 gleichsinnig mit Änderung der Transportgeschwindigkeit geändert werden, sondern sich auch die Funktion der Zonen ändert.

So dienen bei der Nenn-Transportgeschwindigkeit des Pasteurs 6 entsprechend der Figur 2 insgesamt fünf Zonen, nämlich die Zonen 4 - 6 zur Beaufschlagung der Behälter 2 mit der Pasteurisier-Temperatur von 61,4°C. Bei Reduzierung der Transportgeschwindigkeit auf 50% der Nenn-Transportgeschwindigkeit werden die Behälter 2 nur noch in zwei Zonen, nämlich in den Zonen 7 und 8, mit der Pasteurisiertemperatur von 61,4°C beaufschlagt. Bei einer auf 120% der Nenntransportgeschwindigkeit erhöhten Geschwindigkeit erfolgt sogar zusätzlich zu den Zonen 6 bis 8 in den Zonen 4 und 5 eine Beaufschlagung der Behälter 2 mit einer Behandlungstemperatur, die über der Pasteurisiertemperatur von 61,5°C liegt. Durch die Erhöhung der Behandlungstemperatur in den Zonen 4 und 5 wird das Aufwärmen der Behälter 2 beschleunigt, sodass die Pasteurisierung der Behälter 2 bereits im Bereich der Zone 5 beginnt, wie dies der Verlauf der Kurve 13 zeigt.

Ein Vergleich der Figuren 2 - 4 zeigt ferner, dass die Anpassung der Behandlungstemperaturen bzw. des Verlaufs der Behandlungstemperaturen an die Transportgeschwindigkeit des Pasteurs 6 im Wesentlichen in solchen Zonen, d.h. bei der dargestellten Ausführungsform in den Zonen 4 - 7 erfolgt, in denen bei Nenn-Transportgeschwindigkeit (Figur 2) die Behandlungstemperaturen der Pasteurisiertemperatur von 61,4°C entsprechen, die also bei der Nenn-Transportgeschwindigkeit die Pasteurisierzonen bilden. In den vorausgehenden Aufwärmzonen, nämlich bei der dargestellten Ausführungsform in den Zonen 1 - 3 erfolgt keine wesentliche Änderung bzw. Anpassung der Behandlungstemperatur an die geänderte Transportgeschwindigkeit des Pasteurs 6.

Die Behandlungstemperaturen in den als Abkühlzonen dienenden Zonen 9 - 11 sind grundsätzlich entsprechend der geforderten Auslauftemperatur, d.h. der geforderten Temperatur, die die Behälter 2 am Auslauf des Pasteurs 6 aufweisen, so angepasst, dass die jeweilige Auslauf- oder Ausgangstemperatur bei einem möglichst geringen Kälteverbrauch stets gewährleistet ist. Im Detail ist bei der dargestellten Ausführungsform der Verlauf der Behandlungstemperaturen in den als Abkühlzonen dienenden Zonen 9 - 11 so gewählt, dass die Behandlungstemperaturen unabhängig von der Transportgeschwindigkeit des Pasteurs 6 in gleichgroßen Schritten oder im Wesentlichen in gleichgroßen Schritten zum Auslass des Pasteurs 6 hin abnehmen. Da sich die Anzahl der als Abkühlzonen dienenden Zonen in Abhängigkeit von der Transportgeschwindigkeit des Pasteurs kann es zur Erzielung einer gleichbleibenden Ausgangstemperatur der Behälter 2 zweckmäßig sein, dass in den als Abkühlzonen wirkenden Zonen 9 - 11 eine Anpassung der Temperatur und/oder Menge des auf die Behälter 2 ausgebrachten Behandlungsmediums unter Berücksichtigung der Transportgeschwindigkeit und der gewünschten oder erforderlichen Temperatur der Behälter 2 am Auslass des Pasteurs 6 erfolgt.

Durch die Reduzierung der Transportgeschwindigkeit des Pasteurs 6 steht für die Kühlung der Behälter 2 im Anschluss an die Wärmebehandlung mehr Zeit zur Verfügung, sodass dieser Rückkühlprozess, der in den Zonen 9 - 11 erfolgt, genauer und energieeffizienter gestaltet werden kann. Die Ausgangs- oder Auslauftemperatur kann bedingt durch die verlängerte Einwirkzeit der Behandlungsflüssigkeit auf die Behälter 2 in einem kleineren Temperaturgefälle erreicht werden, wodurch sich erhebliche Energieeinsparungen ergeben.

Die Erfindung wurde voranstehend an einem Ausführungsbeispiel beschrieben. Es versteht sich, dass zahlreiche Änderungen sowie Abwandlungen möglich sind, ohne dass dadurch der Schutzbereich der nachfolgenden Ansprüche verlassen wird.

### Bezugszeichenliste

- 1: Anlage
- 2: Behälter
- 3: Auspacker
- 4: Reinigungsmaschine
- 5: Füll- und Verschließmaschine
- 6: Pasteur
- 7: Etikettiermaschine
- 8: Einpacker
- 9: Anlagensteuerung
- 10: Linien bzw. Behandlungstemperatur
- 11, 12: Temperaturverlauf der Behälter 2
- 13: Verlauf der Beaufschlagung mit Pasteurisiereinheiten

## Patentansprüche

1. Pasteur zum Pasteurisieren von mit einem Füllgut, beispielsweise mit einem flüssigen Füllgut gefüllten und verschlossenen Behältern (2), mit einem pasteurinternen Transportelement zum Bewegen der Behälter (2) in einer Transportrichtung (A) durch mehrere in dieser Transportrichtung aufeinander folgende Zonen, in denen die Behälter mit einem flüssigen Behandlungsmedium mit unterschiedlichen Behandlungstemperaturen beaufschlagt werden, wobei die Behandlungstemperaturen (10) in einer Vorwärmzonen bildenden Gruppe von Zonen in Transportrichtung (A) von Zone zu Zone stufenförmig ansteigen, in wenigstens einer folgenden als Pasteurisierzone ausgebildeten Zone zumindest einer Pasteurisiertemperatur entspricht und in einer weiteren Gruppe von als Abkühlzonen dienenden Zonen in Transportrichtung (A) von Zone zu Zone stufenförmig abnimmt, wobei die Transportgeschwindigkeit des pasteurinternen Transportelementes veränderbar ist, **wobei** die Transportgeschwindigkeit des pasteurinternen Transportelementes kontinuierlich steuer- oder regelbar ist,
**dadurch gekennzeichnet, dass die Temperatursteuerung so ausgebildet ist, dass** a) bei Erhöhung der Transportgeschwindigkeit die Anzahl der als Vorwärmzonen dienenden Zonen bei gleichzeitiger Erhöhung der Behandlungstemperatur in diesen Zonen verringert und die Anzahl der als Pasteurisierzonen dienenden Zonen erhöht wird,
oder b) bei einer Reduzierung der Transportgeschwindigkeit die Anzahl der als Vorwärmzonen dienenden Zonen bei teilweiser Reduzierung der Behandlungstemperaturen erhöht und die Anzahl der als Pasteurisierzonen wirkenden Zonen reduziert wird.

2. Pasteur nach Anspruch 1, **dadurch gekennzeichnet, dass** auch die Behandlungstemperaturen zumindest einiger Zonen und/oder der Temperaturverlauf der Zonen an die Änderung der Transportgeschwindigkeit des pasteurinternen Transportelementes angepasst kontinuierlich derart veränderbar sind, dass trotz Änderung der Transportgeschwindigkeit keine Änderung oder im Wesentlichen keine Änderung der Pasteurisationsbedingungen erfolgt.

3. Pasteur nach Anspruch 1 oder 2, **dadurch gekennzeichnet, dass** die Transportgeschwindigkeit des pasteurinternen Transportelementes zwischen 0% und 130% der Nenn-Transportgeschwindigkeit steuer- oder regelbar ist.

4. Pasteur nach Anspruch 3, **dadurch gekennzeichnet, dass** die Transportgeschwindigkeit des pasteurinternen Transportelementes zwischen 20% und 120% der Nenn-Transportgeschwindigkeit steuer- oder regelbar ist.

5. Pasteur nach einem der vorhergehenden Ansprüche, **dadurch gekennzeichnet, dass** er Bestandteil einer Anlage (1) zum Füllen, Verschließen von Behältern (2) und zum Aufbringen von Ausstattungsmerkmalen auf Behälter (2), beispielsweise zum Etikettieren von Behältern (2) ist, und dass die Regelung oder Steuerung der Transportgeschwindigkeit des Transportelementes durch eine Anlagensteuerung (9) erfolgt, beispielsweise in Abhängigkeit von dem Betriebszustand einer dem Pasteur (6) in der Anlage (1) vorausgehenden Füll- und/oder Verschließmaschine (5).

6. Pasteur nach einem der vorhergehenden Ansprüche, **dadurch gekennzeichnet, dass** die Temperatursteuerung so ausgebildet ist, dass unabhängig von der Änderung der Transportgeschwindigkeit die Anzahl der als Abkühlzonen wirkenden Zonen konstant gehalten wird.

7. Pasteur nach einem der vorhergehenden Ansprüche, **dadurch gekennzeichnet, dass** die Temperatursteuerung so ausgebildet ist, dass in den als Abkühlzonen wirkenden Zonen eine Anpassung der Behandlungstemperaturen und/oder der Menge des auf die Behälter (2) ausgebrachten Behandlungsmediums unter Berücksichtigung der Transportgeschwindigkeit und der gewünschten oder erforderlichen Temperatur der Behälter (2) am Auslass des Pasteurs (6) erfolgt.

## Claims

1. Pasteuriser for pasteurising closed containers (2) filled with contents, for example with liquid contents, having a transporting element inside the pasteuriser for moving the container (2) in a transporting direction (A) through a plurality of zones which follow one after the other in said transporting direction, and in which the containers are subjected to a liquid treatment medium at different treatment temperatures, wherein the treatment temperatures (10), in a group of zones forming pre-heating zones, rise in a stepwise manner from zone to zone, as seen in the transporting direction (A), and, in at least one following zone formed as the pasteurising zone, correspond at least to a pasteurising temperature and, in a further group of zones serving as cooling zones, decrease in a stepwise manner from zone to zone, seen in the transporting direction (A), wherein it is possible to change the transporting speed of the transporting element inside the pasteuriser, wherein the transporting speed of the transporting element inside the pasteuriser can be continuously controlled or regulated, **characterised in that the temperature control is configured in such a way that** a) when the transport speed is increased, the number of zones serving as pre-heating zones is decreased, with the simultaneous increase of the treatment temperature in these zones, and the number of zones serving as pasteurising zones is increased, or b) as the transport speed is reduced, the number of zones serving as pre-heating zones increases, with a partial reduction in the treatment temperatures, and the number of zones acting as pasteurising zones is reduced.

2. Pasteuriser according to claim 1, **characterised in that** the treatment temperatures of at least some zones and/or the temperature curve of the zones can be continuously changed, being adjusted to the change in the transport speed of the transport element inside the pasteuriser in such a way that, despite a change in the transport speed, no change or essentially no change takes place in the pasteurising conditions.

3. Pasteuriser according to claim 1 or 2, **characterised in that** the transport speed of the transport element inside the pasteuriser can be controlled or regulated between 0% and 130% of the nominal transport speed.

4. Pasteuriser according to claim 3, **characterised in that** the transport speed of the transport element inside the pasteuriser can be controlled or regulated between 20% and 120% of the nominal transport speed,

5. Pasteuriser according to any one of the preceding claims, **characterised in that** it is a constituent part of a system (1) for filling and closing of containers (2) and for applying equipment features to containers (2), for example for the labelling of containers (2), and that the regulating or controlling of the transport speed of the transport element is provided by a system control (9), for example as a function of the operating status of a filling and/or closing machine (5) upstream of the pasteuriser (6) in the system (1).

6. Pasteuriser according to any one of the preceding claims, **characterised in that** the temperature control is configured in such a way that, independently of the change in the transport speed, the number of zones acting as cooling zone is kept constant.

7. Pasteuriser according to any one of the preceding claims, **characterised in that** the temperature control is configured in such a way that, in the zones acting as cooling zones, an adjustment of the treatment temperatures and/or of the quantity of the treatment medium to which the containers (2) are subjected takes place by taking account of the transport speed and of the desired or required temperature of the containers (2) at the outlet of the pasteuriser (6).

## Revendications

1. Pasteurisateur destiné à pasteuriser des récipients (2) remplis avec un produit de remplissage, par exemple avec un produit de remplissage liquide, et scellés, avec un élément de transport interne au pasteurisateur pour déplacer les récipients (2) dans un sens de transport (A) à travers plusieurs zones consécutives dans ce sens de transport, dans lesquelles les récipients sont alimentés avec un milieu de traitement liquide ayant différentes températures de traitement, les températures de traitement (10) augmentant par paliers de zone en zone dans le sens de transport (A) dans un groupe de zones formant des zones de préchauffage, correspondant dans au moins une zone suivante conçue comme zone de pasteurisation à au moins une température de pasteurisation et diminuant par paliers de zone en zone dans le sens de transport (A) dans un autre groupe de zones servant de zones de refroidissement, la vitesse de transport de l'élément de transport interne au pasteurisateur étant variable, la vitesse de transport de l'élément de transport interne au pasteurisateur étant commandable ou réglable en continu,
**caractérisé en ce que** la commande de température est conçue de telle manière que a) en cas de hausse de la vitesse de transport, le nombre des zones servant de zones de préchauffage est diminué en cas de hausse simultanée de la température de traitement dans ces zones et le nombre des zones servant de zones de pasteurisation est augmenté,
ou b) en cas de diminution de la vitesse de transport, le nombre des zones servant de zones de préchauffage est augmenté en cas de diminution partielle des températures de traitement et le nombre des zones opérant comme zones de pasteurisation est diminué.

2. Pasteurisateur selon la revendication 1, **caractérisé en ce qu'**également les températures de traitement d'au moins certaines zones et/ou l'évolution de températures des zones peuvent être modifiées en continu en étant ajustées à la variation de la vitesse de transport de l'élément de transport interne au pasteurisateur de telle sorte que malgré la variation de la vitesse de transport aucune variation ou essentiellement aucune variation des conditions de pasteurisation ne se produit.

3. Pasteurisateur selon la revendication 1 ou 2, **caractérisé en ce que** la vitesse de transport de l'élément de transport interne au pasteurisateur est commandable ou réglable entre 0 % et 130 % de la vitesse de transport nominale.

4. Pasteurisateur selon la revendication 3, **caractérisé en ce que** la vitesse de transport de l'élément de transport interne au pasteurisateur est commandable ou réglable entre 20 % et 120 % de la vitesse de transport nominale.

5. Pasteurisateur selon l'une quelconque des revendications précédentes, **caractérisé en ce qu'**il est un composant d'une installation (1) destinée à remplir, sceller des récipients (2) et destinée à appliquer des caractéristiques d'équipement sur des récipients (2), par exemple destinée à étiqueter des récipients (2), et **en ce que** le réglage ou la commande de la vitesse de transport de l'élément de transport se produit par une commande d'installation (9), par exemple en fonction de l'état de fonctionnement d'une machine de remplissage et/ou de scellage (5) précédant le pasteurisateur (6) dans l'installation (1).

6. Pasteurisateur selon l'une quelconque des revendications précédentes, **caractérisé en ce que** la commande de température est conçue de telle manière que le nombre des zones opérant comme zones de refroidissement est maintenu constant indépendamment de la variation de la vitesse de transport.

7. Pasteurisateur selon l'une quelconque des revendications précédentes, **caractérisé en ce que** la commande de température est conçue de telle manière que dans les zones opérant comme zones de refroidissement un ajustement des températures de traitement et/ou de la quantité du milieu de traitement appliqué aux récipients (2) se produit compte tenu de la vitesse de transport et de la température des récipients (2) souhaitée ou nécessaire à la sortie du pasteurisateur (6).
